Europäisches Patentamt

European Patent Office

Office européen des brevets

(19)

(11) Publication number: **0 116 069**
**B1**

(12) **EUROPEAN PATENT SPECIFICATION**

(45) Date of publication of patent specification: **05.10.88**

(51) Int. Cl.⁴: **H 01 R 9/00**

(21) Application number: **83902595.4**

(22) Date of filing: **14.07.83**

(86) International application number:
**PCT/US83/01060**

(87) International publication number:
**WO 84/00446 02.02.84 Gazette 84/03**

(54) **BI-VERTICAL MAIN DISTRIBUTING FRAME CONNECTOR.**

(30) Priority: **19.07.82 US 399486**

(43) Date of publication of application:
**22.08.84 Bulletin 84/34**

(45) Publication of the grant of the patent:
**05.10.88 Bulletin 88/40**

(84) Designated Contracting States:
**DE FR GB**

(56) References cited:
**CA-A-1 104 687**
**DE-A-2 443 725**
**FR-A-2 280 215**
**US-A- 732 012**
**US-A-3 947 732**
**US-A-4 012 096**
**US-A-4 037 910**
**US-A-4 053 719**
**US-A-4 278 315**
**US-A-4 340 268**

**Western Electric Technical Digest, No. 63, July
1981, pg. 17. Faust et al.**

(73) Proprietor: **Western Electric Company,
Incorporated
222 Broadway
New York, NY 10038 (US)**

(72) Inventor: **SCERBO, Louis, Joseph
30 Forest Drive
Succasunna, NJ 07876 (US)**
Inventor: **SOLTIS, Robert, Alvin
92 Woodland Road
Brookside, NJ 07926 (US)**

(74) Representative: **Johnston, Kenneth Graham
et al
AT&T (UK) LTD. AT&T Intellectual Property
Division 5 Mornington Road
Woodford Green Essex, IG8 OTU (GB)**

Courier Press, Leamington Spa, England.

## Description

Technical Field

This invention relates generally to electrical terminal apparatus and, more particularly, to connector apparatus for use on a main distributing frame system in a telephone central office.

Background of the Invention

The main distributing frame system in a telephone central office is the focal point of many work activities, and the system serves many diverse purposes, such as: interconnection juncture for joining central office equipment with outside plant facilities; access point for testing into or out of the central office; and protection provisioning interface. Thus, in a functional sense, the frame system provides for connection, testing, and protection.

Connectors used with, and secured to, main distributing frames are the electrical interface between feeder cables from the exchange area and the central office equipment. Connectors generally include a protector field and a cross-connect field, and are mounted on the vertical side on the main distributing frame. Stub cables that run from cable vaults below or above the main distributing frame, and consist of 100 incoming telephone line pairs, are connected to the protector field where protector units provide for each incoming line, voltage and current surge protection for the central office equipment. By indenting or detenting each protector unit, each unit also serves as a switch to individually connect or disconnect each telephone line to the cross-connect field. Jumper wires interconnect the cross-connect field, and either connecting blocks or terminal strips which, in turn, are connected to the central office switching equipment. Connectors may also include a separate test field for accessing the outside plant facilities for test purposes, or may, as will be noted hereinafter, have the accessing capabilities incorporated into the protector units.

The main distributing frame is the site of considerable craftsperson activity. In order to connect each telephone line in the stub cable to the central office equipment, the craftsperson individually connects a pair of jumper wires to a pair of terminals in the cross-connect field. The jumper wires are routed through distributing rings attached in the center of the frame. These operations require that the craftsperson be able to maneuver between connectors on adjoining verticals and perform routing therebetween. The physical characteristics of the craftsperson, such as his or her bicep dimensions and arm length, in conjunction with frame characteristics, such as interconnector spacing and the distance from the front plane of the connector to the distributing ring region of the frame, determine the facility of the frame operations. In addition to being able to maneuver within the frame, the craftsperson must accurately connect the central office equipment to the outside plant facilities to prevent incorrect equipment interconnections. This requires unambiguous identification and association between the cross-connect terminals in the cross-connect field and the protector units in the protector field. Preferably, the cross-connect field and the protector field are front facing to facilitate accurate frame operations.

Prior art connectors are mounted to single vertical members of the main distributing frame. US-A-3,518,611 is representative of a typical prior art central office connector having separate forward-facing connector, protector, and test fields. In order to increase the density of connections per vertical member to improve the efficiency of central office equipment, high-density connectors were devised. Such connectors achieved high-density by rearranging the protector field, the cross-connect field, and the test field into a more compact structure. US-A-4012096, and US-A-4053719 are representative of such prior art high-density connectors. Such connectors, however, created awkward frame operations and identification difficulties. In the US-A-4012096, the protectors and the cross-connect terminals are orthogonal to the front of the distributing frame. In the US-A-4053719, the protector field and the cross-connect field section are orthogonal to each other. In addition, the depth of these connectors is substantially deeper than the front-facing connectors, thereby increasing the distance to the distributing rings on the main frame and decreasing craftsperson accessibility.

Another problem associated with prior art connectors is the inability to compartmentalize in the main frame bays, behind the connectors, the multi-wire stub and equipment cables from the jumper wires, since each bay is shared by both types of wiring. This increases the difficulty in adding new cabling.

An additional problem associated with prior art connectors is insufficient interconnector arm spacing. Human factors studies indicated that substantially improved frame operations would be achieved by increasing the interconnector spacing by less than 25 mm.

Summary of the Invention

The foregoing shortcomings, limitations, and deficiencies in prior art connector devices are precluded with the present invention of an improved bi-vertical, high-density connector, which is mounted to two vertical members of a main distributing frame. The connector is totally front-facing and constructed such that the tops of the protector units within the protector field and the tips of the cross-connect terminals within the cross-connect field, all lie within one plane to eliminate errors due to paralax and to facilitate accurate identification by the craftsperson of protector units and their associated cross-connect terminals.

The connector in accordance with the present invention generally comprises a left and right unit, abutted in spatial mirror image, which together form the connector structure. Each unit comprises a protector field section and a cross-connect field section. The protector field includes a rectangular connector panel having front and back faces, a top and bottom, and opposed left and right sides, and a plurality of pin-grip connectors mounted through the connector panel for receiving pluggable electric protectors. The cross-connect field includes a rectangular cross-connect panel having front and back faces, a top and bottom, and opposed left and right sides, and a plurality of cross-connect terminals mounted through the cross-connect panel and extending forward of the front face and rearward of the back face. The protector and cross-connect fields are aligned so that one side of the cross-connect panel is disposed in the horizontal and vertical directions with the opposed side of the connector panel. A prismatic-shaped designation divider separates the protector field in the left unit from the protector field in the right unit. A similar divider in each unit also separates each cross-connect field and its associated protector field. These dividers focus the eyes of the craftsperson onto the unit he is working and provide surfaces for numerically identifying the terminals in the cross-connect field and the protector units in the protector field. A fanning strip, through which the jumper wires are routed, is disposed along protector field in each unit, and has a front edge surface for also providing numerical identification of the terminals in the crossconnect field. The front edge of the prismatic-shaped designation divider and the front edge surfaces of the fanning strips all lie within the same plane as the tips of cross-connect terminals and the tops of the protector units. The craftsperson thus has a completely planar and front-facing unit to minimize identification errors and maximize frame operability.

The connectors are mounted to two vertical members of the main distributing frame. This advantageously enables compartmentalization within the main frame of the multi-wire equipment and stub cables from the jumper wires. The bay directly behind the connector is allocated solely for the stub cabling and equipment cabling wires. In the adjoining bays, only the jumper wires from the left and right units of horizontally adjacent connectors are run. The addition of new cabling and jumper wire manipulations is thereby facilitated.

An additional advantage of the connector of the present invention is increased interconnector arm spacing for improved craftsperson maneuverability. Furthermore, the distance from the distributing ring to the front surface of the connector of the present invention is less than in prior art high-density connectors, thereby reducing the distance a craftsperson must reach into the frame to route jumper wires through the distributing rings.

Brief Description of the Drawing

FIG. 1 is a pictorial view of the connector of the present invention showing the left and right units, each of which includes a protector field and a crossconnect field, the protector field in the left unit illustrated as having protector units inserted therein;

FIG. 2 shows a front view of the connector attached to two vertical members of a main distributing frame;

FIG. 3 is a rear view of the connector showing the stub cabling attached thereto;

FIG. 4 is an enlarged view of a portion of FIG. 3;

FIG. 5 is a side view of the connector; and

FIG. 6 is a top view of the connector.

Detailed Description

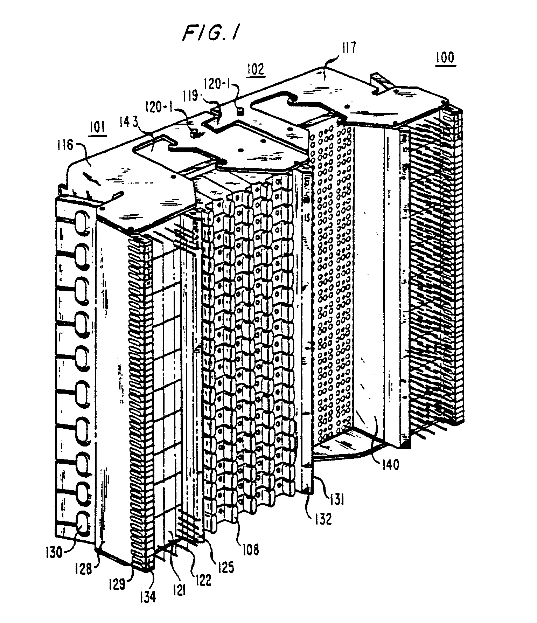

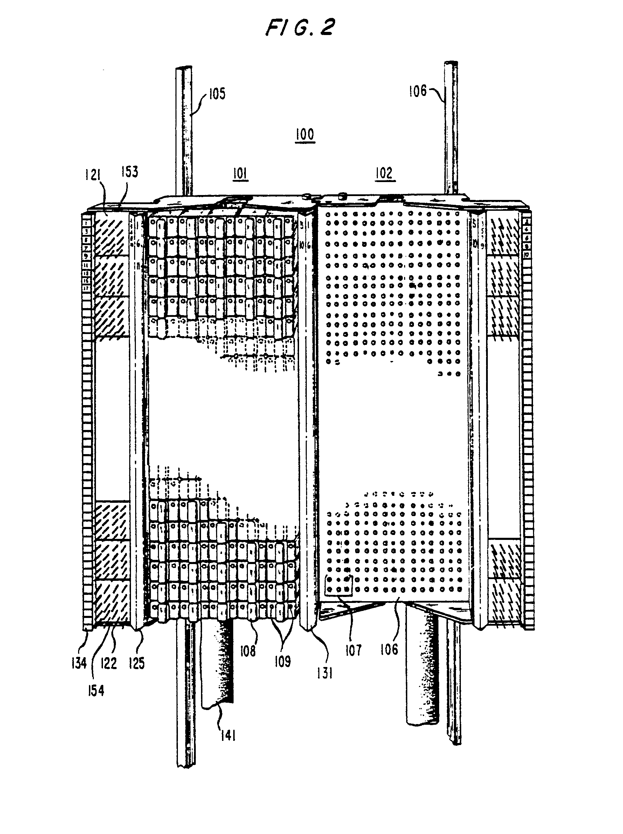

As shown in FIG. 1, the connector 100 of this invention includes a left connector unit 101 and a right connector unit 102 abutted and indexed together in spatial mirror image. As noted in FIG. 2, the connector 100 is designed to be deployed across one bay of a main distributing frame by attachment to two vertical members 105 and 106, respectively, of the distributing frame.

The left and right connector units 101 and 102 are each capable of cross-connecting 100 pairs of outside plant terminations. Each connector 100 is dimensioned so that nine connector units can be mounted in planar fashion on a 3 meter vertical bay yielding a total cross-connect density of 1800 pairs per bay or, equivalently, 900 interconnections per vertical member.

As will be described in detail hereinafter, connector units 101 and 102 each include a protector field and a corresponding cross-connect field. When inserted into the protector field, each protector unit interconnects the tip-and-ring wires of a pair within an attached stub cable to a pair of terminals in the cross-connect field. A pair of jumper wires attached to this pair of cross-connect terminals interconnect the switching equipment to the incoming tip-and-ring conductors. Each connector unit also includes a fanning strip for organizing and identifying the jumper wires and a designation divider which separates the protector field and the cross-connect field. Another designation divider separates the left and right connector units 101 and 102. As will be described, the fanning strip and the designation dividers are marked to numerically identify the terminals in the cross-connect field and the protector units in the protector field. In addition, these dividers are shaped to focus the attention of the craftsperson onto only the left or right connector unit. Furthermore, the fanning strip, the designation dividers, the cross-connect field, and the protector field are disposed within the connector unit in such a manner as to minimize craftsperson errors.

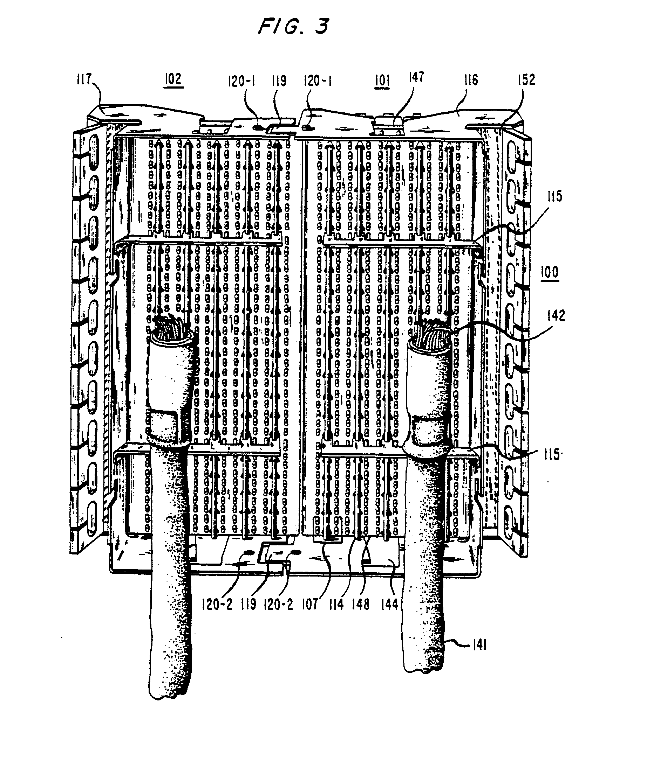

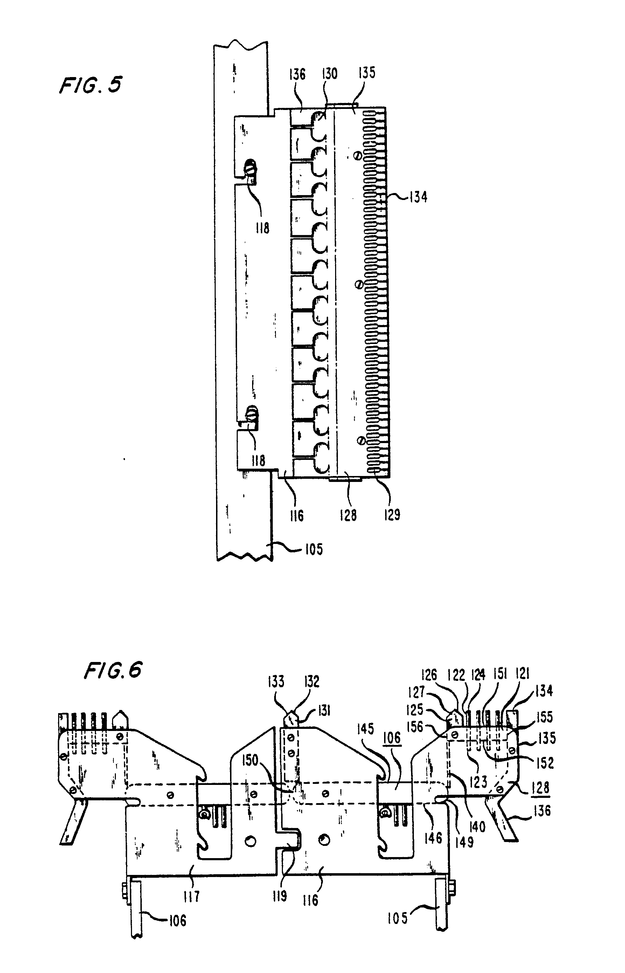

Connector units 101 and 102 include mounting brackets 116 and 117, respectively. Brackets 116 and 117 are formed from stamped or machined steel sheets that are bent into essentially C-shaped brackets which have slots 118 (see FIG. 5) on the side portions thereof for attachment to vertical members 105 and 106 of the distributing frame. As noted in FIGS. 1 and 3, the top and bottom portions of brackets 116 and 117 are notched and grooved 119 for horizontal indexing of the left and right connector units 101 and 102. Brackets 116 and 117 each include pins 120-1 on the top portions thereof, and apertures 120-2 on the bottom portions thereof, for vertical indexing.

The discussion that follows hereinafter focuses only on left connector unit 101. It will be readily apparent to one skilled in the art that the discussion is equally applicable to right connector unit 102, the elements of which are in spatial mirror image to the elements in left connector unit 101. Minor differences between units 101 and 102 will be readily apparent to those skilled in the art.

The protector field of connector unit 101 includes a rectangular connector panel 106 having (see FIG. 6) front and back faces 145 and 146, respectively, a top 147 and a bottom 148, and opposed left and right sides 149 and 150, respectively. Connector panel 106 is formed of a suitable heat- and fire-resistant, durable, insulative material, such as a polycarbonate material commercially available under the trademark Lexan, owned by General Electric. Connector panel 106 is affixed within mounting bracket 116 between the top and bottom portions thereof and also includes a 5x10 array of groups of pin-grip connectors 107 adapted to receive plug-in electric protector units 108 therein (see FIG. 2). Connector 100 has been designed to incorporate electric protector units 108 of the type disclosed in US-A-4307430. This patent describes a protector unit which incorporates test lands which are accessible through apertures 109 in the protector housing, and which, when inserted into the connector panel, provide electrical test access to the outside plant facilities. The need to provide a separate test field on the connector apparatus is thus obviated. Mounting bracket 116 includes notched cutouts 143 and 144 (see FIGS. 1 and 3) on the top and bottom portions thereof, respectively, for the attachment of a testing tool of the type described in US-A-4,298,239. As described in that patent, such a testing tool comprises a matrix grid of spring-loaded pins mounted in a body in mirror image relation to the apertures in the protector units. As employed with the present invention, such a tool includes means for grasping mounting bracket 116 within cut-outs 143 and 144, and means for drawing the body portion of the tool towards the connector to drive the pins into the apertures 109 of the protector units 108. The testing tool is also used to grasp mounting bracket 116 such as to drive the pins into corresponding pin-grip connectors 107 on the connector panel 106.

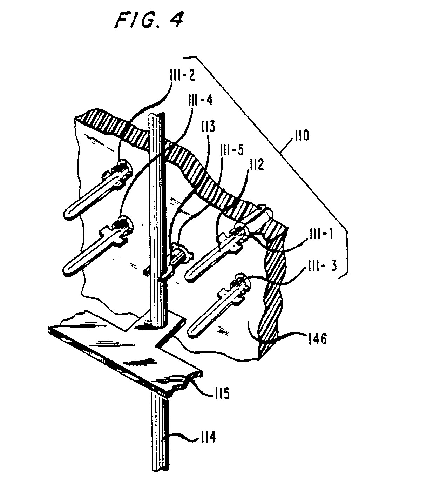

Each group of pin-grip connectors 107 includes five active terminals arranged to match the mating pins of the protectors 108. With reference to FIGS. 3 and 4, the rear of connector 101 and a rear detail of one illustrative group 110 of such terminals 107 comprising terminals 111-1, 111-2, 111-3, 111-4, and 111-5 are shown, respectively. Terminals 111-1, 111-2, 111-3, 111-4, and 111-5, respectively, comprise the outside plant side of tip-and-ring, the switching equipment side of tip-and-ring, and ground. Terminals 111-1, 111-2, 111-3, and 111-4 have respective ends, or terminal portions 112, extending perpendicularly away from the back face 146 of connector panel 106 and have a flat cross-section so that wire attachment thereto can be mechanically effected.

Ground terminal 111-5 has an end portion 113 connected to ground rod 114. As noted in FIG. 3, a ground rod 114 is vertically disposed behind each of the five columns of terminals 107 in cross-connector panel 106, and two ground brackets 115 interconnect the five ground rods 114. The ground brackets 115 are connected to mounting bracket 116 which provides a connection to ground to vertical member 105 of the main distributing frame.

Associated with the protector field in connector unit 101 is a cross-connect field which includes a rectangular cross-connect panel 121 affixed within mounting bracket 116 in the spatial dimension perpendicular to the plane of the connector panel 106 in a parallel, but spaced apart, relation to connector panel 106. With reference to FIGS. 2 and 6, panel 121 has front and back faces 151 and 152, respectively, a top 153 and a bottom 154, and opposed left and right sides 155 and 156, respectively. It is also preferably formed of a polycarbonate material such as that sold under the trademark Lexan. The cross-connect field also includes, as can be noted in FIGS. 1, 2, and 6, a 4x50 matrix of cross-connect terminals 122 which are mounted perpendicularly to, and through, cross-connect panel 121, and which have front portions 124 which extend forward of the front face 151 and rear portions 123 which extend rearward of back face 152. Preferably, each terminal 122 has a rectangular cross-section to facilitate mechanical attachment of wires thereto. In the horizontal and vertical spatial dimensions, the right side 156 of cross-connect panel 121 is disposed along the left side 149 of connector panel 106. The terminals 122 are arranged so that every five rows of terminals 122 are vertically aligned with two rows of protector units 108. Each pair of terminals 122, consisting of a tip terminal and a ring terminal, is associated with one protector 108 in the adjacent protector rows. As will be described in detail hereinafter, the back portions 123 of each pair of terminals 122 are connected at the back face 146 of connector panel 106 to the associated switching side tip-and-ring terminals 111-3 and 111-4.

Integral to cross-connect panel 121, and a physical part thereof, is a designation divider 125 which projects forward from the front face 151 of panel 121 and separates the cross-connect and protector fields (see FIGS. 1, 2, and 6). The front portion of divider 125 is prismatic-shaped, having two rectangular surfaces 126 and 127 oriented rearwardly towards the front surfaces 151 and 145 of cross-connect panel 121 and connector panel 106, respectively. Surface 127 has numerical information printed thereon identifying the first protector unit 108 in the next adjacent protector unit row. Accordingly, every fifth numeral from 1 through 96 is printed thereon. Surface 126 has numerical information printed thereon identifying the second pair of terminals 122 in the next adjacent cross-connect terminal row. Accordingly, every even numeral from 2 through 100 is printed thereon. In addition, alternate five-row regions of cross-connect panel 121 are hot-stamped with a colored foil or, with alternate means, to assist in associating each five rows of terminals 122 with the associated horizontally adjacent two rows of protector units 108.

In prior art connectors, craftsperson identification errors are often the result of a paralax problem created by cross-connect terminals which are recessed relative to the tops of the associated protector units. In such prior art arrangements, the craftsperson will often be simultaneously functioning on, and focusing on, two different work planes which leads to errors. In accordance with the present invention, craftsperson identification problems are virtually eliminated. Firstly, connector panel 121 and terminals 122 therein are disposed in mounting bracket 116 so that, in three orthogonal spatial dimensions, the tips of the front portions 124 of terminals 122 and the tops of the protector units 108, when inserted into connector panel 106, are in the same plane. Accordingly, the craftsperson needs to function and focus on only one operational plane. Secondly, designation divider 125 is proportioned to extend forward of the front plane of cross-connect panel 121 so that the intersection of surfaces 126 and 127 lies in this same plane. The numerical identifications of the adjacent terminals 122 and protectors 108 are also essentially in the craftsperson's work plane. In addition, the angled designation divider 125 focuses the craftsperson's eyes onto the particular area in which he is working and clearly separates the protector and connector fields. As will be described hereinafter, identification problems are further attenuated by means of numerical information printed on a fanning strip 128 and a designation divider 131, the latter separating the protector fields in the two connector units 101 and 102.

With reference to FIGS. 1 and 6, a fanning strip 128, formed from a polycarbonate material such as that sold under the trademark Lexan, and having a forward portion 135, a rear portion 136, and a front edge surface 134 is attached to mounting bracket 116 to the left of, and adjacent to, left side 153 of cross-connect panel 121. Fifty slots 129 are vertically disposed through front edge 134 of the forward portion 135 of fanning strip 128 so that each slot is adjacent to a row of four terminals 122 in cross-connect panel 121. Ten slots 130 are vertically disposed along the rear portion 136 of fanning strip 128. Fanning strip 128 is disposed in mounting bracket 128 so that front edge surface 134 is in essentially the same plane as the tips of terminals 122 and the tops of protectors 108. Printed onto surface 134 is the numerical identification of the first pair of terminals 122 in each next adjacent row. Accordingly, every odd numeral 1 through 99 is printed thereon.

Incorporated within connector unit 101, and attached between the top and bottom portions of mounting bracket 116, is designation divider 131, which is formed from a polycarbonate material such as that sold under the trademark Lexan. When left connector unit 101 is horizontally indexed with right connector unit 102 on adjacent vertical frame members 105, and 106, divider 131 separates and numerically identifies the adjacent protector units 108 in the protector fields of both connector units. Furthermore, the angled divider maintains the focus of the craftsperson on only the unit he or she is working. Designation divider 131 has a prismatic-shaped front portion having two rectangular surfaces 132 and 133, which are oriented rearwardly towards the connector panels 106 in connector units 101 and 102, respectively. Printed on surface 132 are the numerical identities of the last protector units 108 in each adjacent row in connector panel 106 in connector unit 101. Similarly, printed on surface 133 are the numerical identities of the first protector units 108 in each adjacent row in connector unit 102. Designation divider 131 is disposed within mounting bracket 116 so that the intersection of surfaces 132 and 133 lies in the same plane as the tips of the front portion 124 of cross-connect terminals 122, the tops of protector units 108, the front edge of designation divider 125, and the front edge surface 134 of fanning strip 128. It is readily apparent that designation divider 131 serves both connector units 101 and 102 and does not have a corresponding component in connector unit 102.

Connector unit 101 also includes a plastic protective strip 140 (see FIGS. 1 and 6) disposed between the left edge of connector panel 106 and the right edge of designation divider 125 to isolate and protect the back plane wiring from the front plane craftsperson operational activities.

A 100-pair stub cable 141 is connected to the back plane of connector panel 106 (see FIG. 3). The tip-and-ring conductors of each pair of wires 142 within stub cable 141 are individually wire-wrapped to the terminal portions 112 of the outside plant tip-and-ring terminals 111-1 and 111-2 (see FIG. 4). In order to simplify the drawings, connection of the tip-and-ring conductors 142 to terminals 111-1 and 111-2 is not shown. A second set of wires (not shown) is wire-wrapped to the terminal portions 112 of the switching equipment tip-and-ring terminals 111-3 and 111-4. The other ends of these wires are wire-wrapped to the end portions 123 of the terminals 122 in the cross-connect field 121 that numerically correspond to the particular group of pin-grip connectors to which the wires are connected. When a protector 108 is inserted into the pin-grip connectors 107 in the connector panel 106, a direct electrical connection is made between a pair of conductors 142 in the stub cable 141 and a pair of terminals 122 in cross-connect panel 121.

To connect the switching equipment in the central office to the connector, a pair of jumper wires is wire-wrapped to the front portions 124 of a pair of cross-connect terminals 122. The two jumper wires, connected to a pair of terminals 122 in each row of cross-connect terminals, are snapped into an aperture 129 in the front portion of fanning strip 128. Five adjacent groups of these two wires are further grouped and snapped into an aperture 130 in the rear portion of fanning strip 128. This grouping of jumper wires facilitates the orderly routing of the jumper wires behind the bay. The jumper wires are routed through distributing rings at the rear of the main frame, and then connected to connecting blocks or terminal strips which interconnect the switching equipment.

It is apparent from FIGS. 2, 3, and 6, that the bay between the vertical frame members l05 and l06, which support connector units 101 and l02, contains only stub cabling, and the two adjacent bays contain only jumper wires. Such bay compartmentalization facilitates the running of additional stub cabling within the central office, and also facilitates running of the jumper wires through the distributing rings on the main frame as additional connectors are added to the main frame.

Although the connector 100 of the present invention has been described as including two connector units 101 and l02, the connector could also be interconnected and manufactured as a unitary structure.

## Claims

1. A connector unit for use on a main frame for interconnecting outside plant wires to preselected central office equipment leads, the connector unit comprising in combination a protector field comprising a generally planar connector panel adapted to receive pluggable electric protectors, and a cross-connect field comprising a generally planar cross-connect panel (127) on which is mounted a plurality of terminals (122), characterized in that the protector field and the cross-connect field are so mounted in a unitary structure (101, 102) that the connector panel (106) and the cross-connect panel (121) extend generally parallel to one another, one side (149) of the connector panel is generally aligned with one side of the cross-connect panel so that the panels are offset with respect to one another, and the connector panel is positioned a predetermined distance to the rear of the cross-connect panel, the distance being such that the forward ends of the electric protectors (108) when plugged into the connector panel lie in substantially the same plane as the forward ends of the terminals (122) mounted in the cross-connect panel.

2. A connector unit in accordance with claim 1, characterized in that a designation divider (125, 131) is longitudinally disposed between the one side of the connector panel (106) and the aligned side of the cross-connect panel (127) and extends forward from the front of the connector panel (106) and the front of the cross-connect panel (127).

3. A connector unit in accordance with claim 2, characterized in that the designation divider has a prismatic-shaped front portion having first and second surfaces (126, 127, 132, 133) which are inclined rearwardly, respectively, towards the cross-connect panel (127) and the connector panel (106).

4. A connector unit in accordance with claim 3, characterized in that the intersection of the first and second surfaces of the designation divider lies in substantially the same plane as the forward ends of the terminals (122) mounted in the cross-connect field (121) and the forward ends of the electric protectors (108) when plugged into the protector field (106).

5. A connector unit in accordance with any of claims 2-4, characterized in that a fanning strip (128) is disposed along the side (134) of the cross-connect panel (121) opposite to the aligned side (153), the fanning strip including a front portion (135) extending forward from the front of the cross-connect panel, an edge surface that extends parallel to the front of the cross-connect panel, and a plurality of slots (129) disposed in the front portion along the edge surface, each slot extending from the edge surface towards the cross-connect panel.

6. A connector unit in accordance with claim 5, characterized in that the edge surface (134) is in substantially the same plane as the forward ends of the terminals (122) mounted in the cross-connect field and the forward ends of the electric protectors (108) when plugged into the protector field.

7. A connector unit in accordance with claim 5, characterized in that the fanning strip (128) includes a rear portion (136) that extends rearwardly of the rear of the cross-connect panel, the rear portion including a second plurality of slots (130).

## Patentansprüche

1. Verbindungsstück zur Anwendung in einem Hauptverteilungsgestell zur Verbindung von außeranlagemäßigen Drähten mit vorgewählten Leitungen der zentralen Amtsausrüstung, wobei das Verbindungsstück in Kombination ein Schutzfeld mit einer im großen und ganzen ebenen Verbinderwand zur Aufnahme von steckbaren elektrischen Schutzeinrichtungen und ein Kreuzverbindungsfeld mit einer im großen und ganzen ebenen Kreuzverbinderwand (121) aufweist, auf welcher eine Mehrzahl von Anschlüssen (122) befestigt ist, dadurch gekennzeichnet, daß das Schutzfeld und das Kreuzverbinderfeld so in einer einheitlichen Struktur (101, 102) montiert sind, daß die Verbinderwand (106) und die Kreuzverbinderwand (121) sich generell parallel zueinander erstrecken, daß eine Seite (149) der Verbinderwand im großen und ganzen zu einer Seite der Kreuzverbinderwand so ausgerichtet ist, daß die Wände gegeneinander versetzt sind und daß die Verbinderwand um einen vorbestimmten Abstand zur Rückseite der Kreuzverbinderwand angeordnet ist, wobei dieser Abstand so gewählt ist, daß die vorderen Enden der elektrischen Schutzeinrichtungen (108), wenn sie in die Verbindungswand eingestöpselt sind, im wesentlichen in der gleichen Ebene wie die vorderen Enden der Anschlüssen (122) liegen, die in der Kreuzverbinderwand angebracht sind.

2. Verbindungsstück nach Anspruch 1, dadurch gekennzeichnet, daß eine Beschriftungsleiste (125, 131) längs einer Seite der Verbinderwand (106) und der ausgerichteten Seite der Kreuzverbinderwand (121) angeordnet ist und sich von der Vorderseite der Verbinderwand (106) und der Vorderseite der Kreuzverbinderwand (121) nach vorn erstreckt.

3. Verbindungsstück nach Anspruch 2, dadurch gekennzeichnet, daß die Beschriftungsleiste ein prismatisches Vorderteil mit einer ersten und einer zweiten Oberfläche (126, 127; 132, 133) aufweist, die jeweils nach rückwärts zu der Kreuzverbinderwand (121) bzw. der Verbinderwand (106) geneigt sind.

4. Verbindungsstück nach Anspruch 3, dadurch gekennzeichnet, daß der Schnitt zwischen der ersten und zweiten Oberfläche der Beschriftungsleiste im wesentlichen in der gleichen Ebene wie die vorderen Enden der Anschlüsse (122) in dem Kreuzverbinderfeld (121) und wie die vorderen Enden der elektrischen Schutzeinrichtungen (108) liegen, wenn diese in dem Schutzfeld (106) eingestöpselt sind.

5. Verbindungsstück gemäß einem der Ansprüche 2-4, dadurch gekennzeichnet, daß ein Fächerstreifen (128) entlang der einen Seite (134) der Kreuzverbinderwand (121) entgegengesetzt zur ausgerichteten Seite (153) angeordnet ist, daß der Fächerstreifen einen sich von der Vorderseite der Kreuzverbinderwand erstreckenden Vorderabschnitt (135) eine sich parallel zur Vorderseite der Kreuzverbinderwand erstreckende Randoberfläche und eine Mehrzahl von Schlitzen (129) aufweist, die im vorderen Abschnitt entlang der Randoberfläche angeordnet sind, wobei sich jeder Schlitz von der Randoberfläche zu der Kreuzverbinderwand erstreckt.

6. Verbindungsstück nach Anspruch 5, dadurch gekennzeichnet, daß die Randoberfläche (134) im wesentlichen in der gleichen Ebene wie die vorderen Enden der in dem Kreuzverbinderfeld angebrachten Anschlüsse (122) und die vorderen Enden der in dem Schutzfeld eingestöpselten elektrischen Schutzeinrichtungen (108) liegt.

7. Verbindungsstück nach Anspruch 5, dadurch gekennzeichnet, daß der Fächerstreifen (128) einen rückwärtigen Abschnitt (136) aufweist, der sich nach rückwärts von der Rückseite der Kreuzverbinderwand erstreckt, und daß der rückwärtige Abschnitt (136) eine zweite Mehrzahl von Schlitzen (130) aufweist.

## Revendications

1. Une unité de connecteur prévue pour l'utilisation dans un répartiteur principal pour interconnecter des fils d'installations extérieures à des conducteurs d'équipements présélectionnés d'un centre de commutation, l'unité de connecteur comprenant en combinaison une zone de protection qui comprend un panneau de connecteurs, de forme générale plane, prévu pour recevoir des dispositifs de protection électriques enfichables, et une zone de répartition qui comprend un panneau de répartition (121), de forme générale plane, dans lequel sont montées un ensemble de bornes (122), caractérisée en ce que la zone de protection et la zone de répartition sont assemblées en une structure unitaire (101, 102), en ce que le panneau de connecteurs (106) et le panneau de répartition (121) s'étendent de façon générale parallèlement l'un à l'autre, un côté (149) du panneau de connecteurs est de façon générale aligné avec un côté du panneau de répartition, de façon que les panneaux soient mutuellement décalés, et le panneau de connecteurs est placé à une distance prédéterminée de l'arrière du panneau de répartition, cette distance étant telle que les extrémités avant des dispositifs de protection électriques (108), lorsqu'ils sont enfichés dans le panneau de connecteurs, se trouvent pratiquement dans le même plan que les extrémités avant des bornes (12) qui sont montées dans le panneau de répartition.

2. Une unité de connecteur selon la revendication 1, caractérisée en ce qu'un séparateur de désignation (125, 131) est disposé longitudinalement entre le côté précité du panneau de connecteurs (106) et le côté aligné du panneau de répartition (121), et s'étend vers l'avant à partir de l'avant du panneau de connecteurs (106) et de l'avant du panneau de répartition (121).

3. Une unité de connecteur selon la revendication 2, caractérisée en ce que le séparateur de désignation comporte une partie avant de forme prismatique qui présente des première et seconde surfaces (126, 127, 132, 133) qui sont respectivement inclinées vers l'arrière, en direction du panneau de répartition (121) et du panneau de connecteurs (106).

4. Une unité de connecteur selon la revendication 3, caractérisée en ce que l'intersection des première et seconde surfaces du séparateur de désignation se trouve pratiquement dans le même plan que les extrémités avant des bornes (122) qui sont montées dans la zone de répartition (121), et les extrémités avant des dispositifs de protection électriques (108), lorsqu'ils sont enfichés dans la zone de protection (106).

5. Une unité de connecteur selon l'une quelconque des revendications 2 à 4, caractérisée en ce qu'une réglette d'éclatement (108) est disposée le long du côté (134) du panneau de répartition (121) qui est opposé au côté aligné (153), la réglette d'éclatement comprenant une partie avant (135) qui s'étend vers l'avant à partir de l'avant du panneau de répartition, une surface de bord qui s'étend parallèlement à l'avant du panneau de répartition, et un ensemble d'ouvertures (129) qui sont disposées dans la partie avant, le long de la surface de bord, chaque ouverture s'étendant en direction du panneau de répartition, à partir de la surface de bord.

6. Une unité de connecteur selon la revendication 5, caractérisée en ce que la surface de bord (134) est pratiquement dans le même plan que les extrémités avant des bornes (122) qui sont montées dans la zone de répartition, et les extrémités avant des dispositifs de protection électriques (108), lorsqu'ils sont enfichés dans la zone de protection.

7. Une unité de connecteur selon la revendication 5, caractérisée en ce que la réglette d'éclatement (128) comprend une partie arrière (136) qui s'étend vers l'arrière de l'arrière du panneau de répartition, cette partie arrière comprenant un second ensemble d'ouvertures (130).

*FIG. 1*

# FIG. 2

## FIG. 3

## FIG. 4

**FIG. 5**

**FIG.6**